Europäisches Patentamt

European Patent Office

Office européen des brevets

(11) Veröffentlichungsnummer: **0 234 184**
A2

(12) # EUROPÄISCHE PATENTANMELDUNG

(21) Anmeldenummer: 87100034.5

(22) Anmeldetag: 03.01.87

(51) Int. Cl.³: **A 47 C 3/30**
A 47 C 1/024, F 16 F 9/02
B 60 N 1/06

(30) Priorität: 18.01.86 DE 8601132 U

(43) Veröffentlichungstag der Anmeldung:
02.09.87 Patentblatt 87/36

(84) Benannte Vertragsstaaten:
AT BE CH DE ES FR GB IT LI NL SE

(71) Anmelder: Ignaz Vogel GmbH & Co KG, Fahrzeugsitze
Kleinsteinbacher Strasse 42-44
D-7500 Karlsruhe 41-Stu(DE)

(72) Erfinder:
Der Erfinder hat auf seine Nennung verzichtet

(74) Vertreter: Trappenberg, Hans
Wendtstrasse 1
D-7500 Karlsruhe 21(DE)

(54) Gas-Stellfeder.

(57) Bekannte Gas-Stellfedern sind mit dem Nachteil behaftet, daß das zum Stellen der Feder notwendige Ventil schwierig herzustellen und damit teuer ist und daß es außerdem sehr viel Platz beansprucht. Ein weiterer Nachteil ist, daß die Ventilbetätigung stets von der der Kolbenstange gegenüberliegenden Stirnseite aus erfolgt, die Befestigung der Gas-Stellfeder also schwierig ist.

Eliminiert werden diese Nachteile dadurch, daß das Ventil ein in der Kolbenstange angeordnetes Schiebeventil ist, das durch eine Längsbohrung der Kolbenstange hindurch bedienbar ist.

Fig. 1

EP 0 234 184 A2

03.12.1986 n45
VW 1278

Ignaz Vogel GmbH & Co. KG, Fahrzeugsitze
Kleinsteinbacher Str. 42 - 44, 7500 Karlsruhe 41-Stu.

## Gas-Stellfeder

Die Erfindung betrifft eine Gas-Stellfeder, gebildet aus
einem mit Hydraulikflüssigkeit und Druckgas gefüllten Zylinder, wobei das Druckgas auch in einem separaten, durch
einen Freikolben abgetrennten Zylinderteil untergebracht
sein kann, bei der der Zylinder durch einen Kolben mit nach
außen führender Kolbenstange in zwei Zylinderräume unterteilt ist und beide Zylinderräume zum Einstellen der Kolbenstellung über ein Ventil miteinander zu verbinden sind.

Derartige Gas-Stellfedern werden insbesondere bei Sitzmöbeln, und hier wieder vorzugsweise bei Fahrgastsitzen, verwendet, insbesondere zum Einstellen entweder der Sitzhöhe
oder auch der Winkellage der Rückenlehne derartiger Sitze.
Sie haben den Vorteil, daß sie beim Verstellen kein Geräusch verursachen, daß sie kontinuierlich verstellbar,
wartungsfrei und außerdem auf wirtschaftliche Art und Weise herstellbar sind. Nachteilig bei diesen Gas-Stellfedern wird allerdings empfunden, daß das Ventil, das die beiden durch den Kolben getrennten Zylinderräume miteinander verbindet, recht aufwendig herzustellen ist und insbesondere sehr viel Raum im Inneren des Zylinders beansprucht. Durch die schwierige Herstellung dieses Ventils wird die Herstellung der Gas-Stellfeder verteuert. Die räumliche Ausdehnung des Ventils im Zylinderinneren begrenzt die Verstellmöglichkeit derartiger Gas-Stellfedern beziehungsweise erfordert, ist eine bestimmte Verstellmöglichkeit gewünscht, eine beträchtliche Federlänge. Diese große Federlänge läßt in vielen Fällen eine einfache Unterbringung derartiger Gas-Stellfedern nicht zu beziehungsweise macht schwierige, nicht mehr wartungsfreie Gelenke erforderlich, die selbstverständlich wieder die Verwendung solcher Gas-Stellfedern verteuert.

Weiter wird bei diesen Stellfedern bemängelt, daß deren Befestigung, dadurch, daß beide Zylinder-Stirnseiten belegt sind, einmal durch die austretende Kolbenstange, zum anderen durch das dort befindliche Ventil, erschwert ist. Wäre die Zylinder-Stirnfläche, die bei den bekannten Ausführungen das Ventil aufnimmt, frei, könnte dort nicht nur die Befestigung erfolgen, sondern auch ein Verlängerungsstück eingeschraubt werden, um die Stellfeder auf die jeweils gewünschte Montagelänge zu bringen.

Die Erfindung hat sich die Aufgabe gestellt, ein Ventil für derartige Gas-Stellfedern anzugeben, das einfach und daher äußerst preiswert herzustellen ist und das keinen über den Platzbedarf des Kolbens hinausgehenden Raum beansprucht und das außerdem durch die Kolbenstange hindurch bedienbar ist.

Erreicht wird dies nach der Erfindung dadurch, daß das Ventil ein Schiebeventil ist, das endständig mit der Freiseite des Kolbens abschließend, in der Kolbenstange angeordnet ist und daß das Ventil über einen durch die Kolbenstange geführten Stößel zu verschieben ist.

Nicht mehr also wie bei den bekannten Konstruktionen ist das Ventil ein zusätzliches, im Zylinderraum unterzubringendes Bauteil, sondern es wird, als Schiebeventil, im Inneren der sowieso vorhandenen und benötigten Kolbenstange untergebracht. Dadurch ist auf jeden Fall ein separater Raumbedarf für dieses Ventil nicht mehr notwendig, so daß die gesamte Gas-Stellfeder wesentlich kürzer zu bauen und daher auch unschwer und ohne besondere Gelenke unterzubringen ist. Darüberhinaus ist das Ventil auch, trotz seiner Kleinheit, einfach und damit preiswert herzustellen. Es besteht, als Schiebeventil, lediglich aus einem Ventilschieber, der in einer Hülse mit beidseits angeordneten Ventildichtungen verschiebbar ist, wobei sowohl der Ventilschieber wie auch die Ventilhülse preiswert herzustellende Drehteile sind. Die Ventilhülse mit ihrem Ventilschieber wird sodann in eine endständige, von der Stirnseite aus einzubringende Längsbohrung, in die Kolbenstange eingesetzt, so daß die Kolbenstangenwandung das Gehäuse dieses Ventils bildet. Hierbei kann sich der Ventilschieber an einer Schulter der Längsbohrung abstützen. Dieser so untergebrachte Ventilschieber kann nunmehr unschwer durch einen, durch eine Längsbohrung der Kolbenstange hindurchgeführten Stößel betätigt werden, so daß die der Kolbenstange gegenüberliegende Stirnseite des Zylinders frei bleibt. Diese Zylinder-Stirnseite kann nun mit einer Gewindebohrung oder sonstigen Befestigungseinrichtungen versehen werden, wodurch eine einfache Befestigungsmöglichkeit sowie auch eine Anpassung der Montagelänge dieser erfindungsgemäßen Gas-Stellfeder gegeben ist.

Insgesamt ergibt sich damit eine Gas-Stellfeder, die einfach herzustellen und damit preiswert ist und die außerdem sehr kurz baut, einfach zu befestigen und an die jeweils gewünschte Montagelänge anpaßbar ist.

Auf der Zeichnung ist ein Ausführungsbeispiel nach der Erfindung schematisch dargestellt, und zwar zeigen:

Fig. 1 einen Längsschnitt durch eine derartige Gas-Stellfeder und

Fig. 2 einen Ausschnitt um das Ventil.

Ein zylindrisches Rohr 1 ist beidseits auf bekannte Art und Weise über Dichtstücke 2, 3 mit Dichtungen 4, 5 abgeschlossen. Im Dichtstück 2 befindet sich eine Gewindebohrung 6, die das Anschrauben der Gas-Stellfeder an beliebige Konstruktionsteile, die auch das Aufschrauben von Verlängerungsstücken gestattet. Das Dichtstück 3 ist zum Durchtritt einer Kolbenstange 7 durchbohrt. Die Dichtung 5 ist weitergeführt zu einer Manschettendichtung 8, die auf der Kolbenstange 7 aufliegt. Die Kolbenstange 7 ist mit einem Kolben 9 verbunden, der den Zylinder 10 in zwei Kolbenräume 11, 12 unterteilt. Weiter ist noch ein Freikolben 13 vorgesehen, der den Zylinderraum 11 von einem Gasraum 14 trennt. (Statt des separaten Gasraums 14 kann das Druckgas auch direkt in den Zylinder 10 eingeleitet werden, so daß sich im Zylinder eine Druckgas/Hydraulikflüssgkei-Mischung befindet.)

Zum Verbinden der beiden Zylinderräume 11, 12 dient ein Ventil 15. Dieses Ventil 15 ist als Schiebeventil ausgeführt und wird gebildet durch einen Ventilschieber 16, zusammen mit einer Ventilhülse 17 sowie beidseits der Ventilhülse 17 angeordneten Ventildichtungen 18, 19. Die Ventilhülse 17 mit ihren Ventildichtungen 18, 19 wird in einer Längsbohrung 20, die von der Stirnseite aus in die Kolbenstange 7 eingebracht ist, durch einen Abstandsring 21 gehal-

ten. Der Ventilschieber 16 schlägt hierbei an eine Schulter 22 dieser Längsbohrung 20 an. Auf dem Ventilschieber 16 sitzt ein Stößel 23, der in der Kolbenstange 7 nach außen geführt ist.

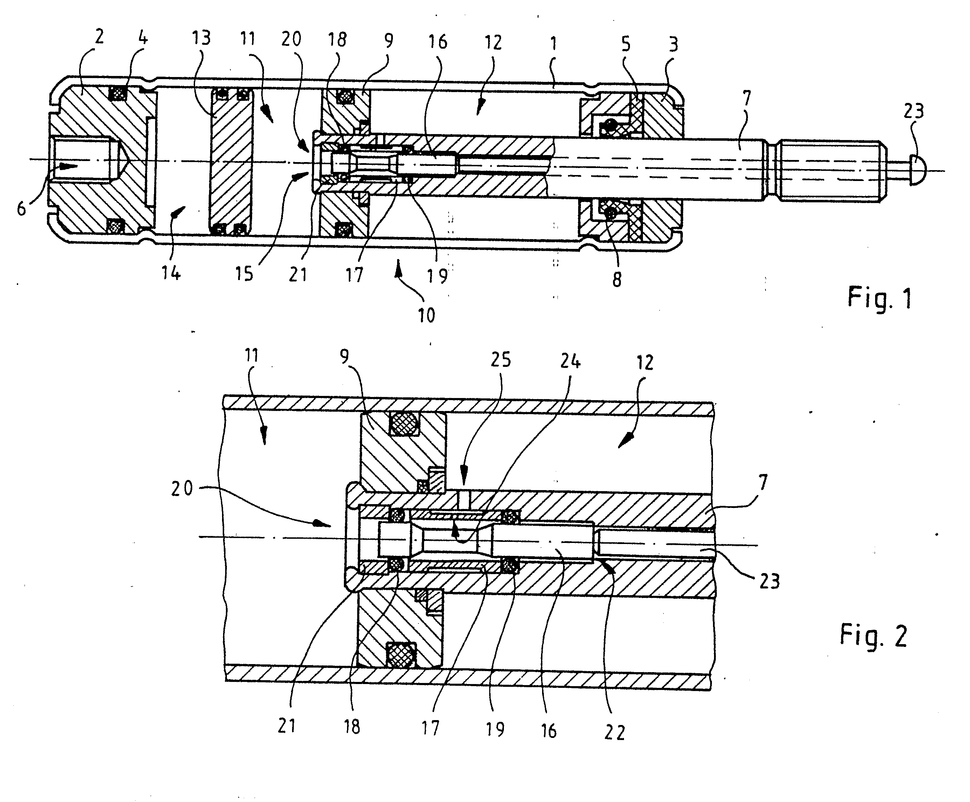

In den Fig. 1 und 2 ist das Schiebeventil im geschlossenen Zustand gezeigt. Beim Drücken des Stößels 23 wird der Ventilschieber 16 aus dem Bereich der Dichtung 18 verschoben, so daß Hydraulikflüssigkeit aus dem Zylinderraum 11 am Ventilschieber 16 vorbei durch die Bohrungen 24, 25 in den Zylinderraum 12 gelangen kann. Da das Schiebeventil nach der Neuerung keinen zusätzlichen Raum innerhalb des Zylinders 10 einnimmt, kann der gesamte Verschiebeweg des Kolbens 9 ausgenutzt werden, so daß sich eine sehr kurze Bauweise der neuerungsgemäßen Gas-Stellfeder ergibt.

03.12.1986 n45
VW ~~0109~~ *1278*

Ignaz Vogel GmbH & Co. KG, Fahrzeugsitze
Kleinsteinbacher Str. 42 - 44, 7500 Karlsruhe 41-Stu.

P A T E N T A N S P R Ü C H E

1. Gas-Stellfeder, gebildet aus einem mit Hydraulikflüssigkeit und Druckgas gefüllten Zylinder, wobei das
Druckgas auch in einem separaten, durch einen Freikolben
abgetrennten Zylinderteil untergebracht sein kann, bei der
der Zylinder durch einen Kolben mit nach außen führender
Kolbenstange in zwei Zylinderräume unterteilt ist und beide
Zylinderräume zum Einstellen der Kolbenstellung über ein
Ventil miteinander zu verbinden sind,
dadurch gekennzeichnet,
daß das Ventil ein Schiebeventil (15) ist, das endständig
mit der Freiseite des Kolbens (9) abschließend, in der
Kolbenstange (7) angeordnet ist und daß das Ventil über
einen durch die Kolbenstange (7) geführte Stößel (23) zu
verschieben ist

0234184

2. Gas-Stellfeder nach Anspruch 1,
dadurch gekennzeichnet,
daß das Schiebeventil (15) gebildet ist aus einem Ventilschieber (16), der in einer Ventilhülse (17) mit beidseits
angeordneten Ventildichtungen (18, 19) verschiebbar ist,
und die Ventilhülse (17) in einer endständigen Längsbohrung (20) in der Kolbenstange (7) eingesetzt ist.

3. Gas-Stellfeder nach Anspruch 2,
dadurch gekennzeichet,
daß sich der Ventilschieber (16) an einer Schulter (22) der
Längsbohrung (20) abstützt.

Fig. 1

Fig. 2

0234184